Europäisches Patentamt

**European Patent Office**

Office européen des brevets

(11) Numéro de publication: **0 088 850**
**B1**

(12) **FASCICULE DE BREVET EUROPEEN**

(45) Date de publication du fascicule du brevet:
**16.07.86**

(21) Numéro de dépôt: **82400453.5**

(22) Date de dépôt: **12.03.82**

(51) Int. Cl.⁴: **B 01 F 3/04,** B 01 F 13/02,
C 02 F 3/16

(54) Dispositif pour introduire un gaz dans un liquide et application dudit dispositif.

(43) Date de publication de la demande:
**21.09.83 Bulletin 83/38**

(45) Mention de la délivrance du brevet:
**16.07.86 Bulletin 86/29**

(84) Etats contractants désignés:
**AT BE CH DE GB IT LI NL SE**

(56) Documents cités:
**DE - A - 2 546 429**
**DE - B - 2 149 047**
**FR - A - 2 024 477**
**FR - A - 2 293 235**
**US - A - 3 800 462**

(73) Titulaire: **Roland, Jean-Louis, 40 bis, Rue J.J. Rousseau,**
**F-92700 Colombes (FR)**

(72) Inventeur: **Roland, Jean-Louis, 40 bis, Rue J.J.**
**Rousseau, F-92700 Colombes (FR)**

(74) Mandataire: **Armengaud, Alain, Cabinet ARMENGAUD**
**AINE 3 Avenue Bugeaud, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention est relative à un dispositif du type décrit dans la demande de brevet français FR-A 2 293 235, destiné à introduire un gaz au sein d'une masse liquide statique ou en mouvement, afin d'en réaliser la solution dans ce liquide.

Selon ce document antérieur, un tel dispositif est caractérisé en ce qu'il comprend: un moteur d'entraînement, une boîte à vent, une tubulure de prise de gaz, et une turbine de diffusion radiale accouplée à une turbine de brassage, ces deux turbines étant immergées dans la masse liquide.

On sait que la mise en suspension des boues qui décantent dans le fond d'un dégraisseur est souvent difficile à effectuer. La même difficulté se présente pour les boues qui flottent dans les bassins d'aération ou de décantation des unités de traitement biologique. La recirculation des boues décantées du bassin de décantation au bassin d'aération nécessite une pompe, même pour un faible débit. Cette invention se propose d'assurer cette recirculation sans utilisation de pompe.

A cet effet, l'invention vise un dispositif conforme au brevet français spécifié ci-dessus, caractérisé en ce qu'il comprend: une cuvette tronconique dont la grande base, tournée vers le haut, est placée sous la turbine de brassage et dans l'axe de cette dernière; et une conduite débouchant dans ladite cuvette à sa partie inférieure, immédiatement au-dessus de sa petite base, et amenant les boues à recirculer afin d'alimenter ladite cuvette tangentiellement, dans le sens de rotation de la turbine.

Selon une autre caractéristique de cette invention, on fixe sous cette turbine, dans le prolongement de son axe, un arbre cylindrique venant se positionner dans ladite cuvette selon l'axe de cette dernière, cet arbre cylindrique assurant le guidage du vortex créé dans la cuvette par ladite turbine.

L'invention vise également l'application de ce dispositif à la prévention de la décantation des boues dans le fond des dégraisseurs aérés et du départ avec l'effluent épuré des flottants, ainsi qu'à la recirculation des boues activées du bassin de décantation au bassin d'aération, en permettant une reprise en continu, durant le temps où fonctionne le dispositif, des boues décantées et des flottants.

L'invention vise également un dispositif conforme au brevet français ci-dessus, caractérisé en ce que le moteur entraînant la turbine de brassage et la turbine de diffusion radiale est placé à la partie inférieure de façon à être toujours immergé, en ce que la prise d'air est située dans l'axe du dispositif, et en ce qu'il comporte des joints d'étanchéité lubrifiés à l'eau.

L'invention vise en outre l'application de ce dispositif à l'aération des aquariums industriels fixes et des cuves de transport de poissons vivants sur camions.

D'autres caractéristiques et avantages de cette invention ressortiront de la description faite ci-après en référence aux dessins annexés, qui en illustrent divers exemples de réalisation. Sur les dessins:

– la fig. 1 est une vue en élévation et coupe partielle d'un dispositif selon l'invention pour assurer la recirculation des boues;

– la fig. 2 est une vue similaire à la fig. 1, montrant l'arbre cylindrique assurant le guidage du vortex;

– fig. 3 est une vue en élévation et coupe partielle du dispositif selon l'invention pour introduire de l'air dans des aquariums.

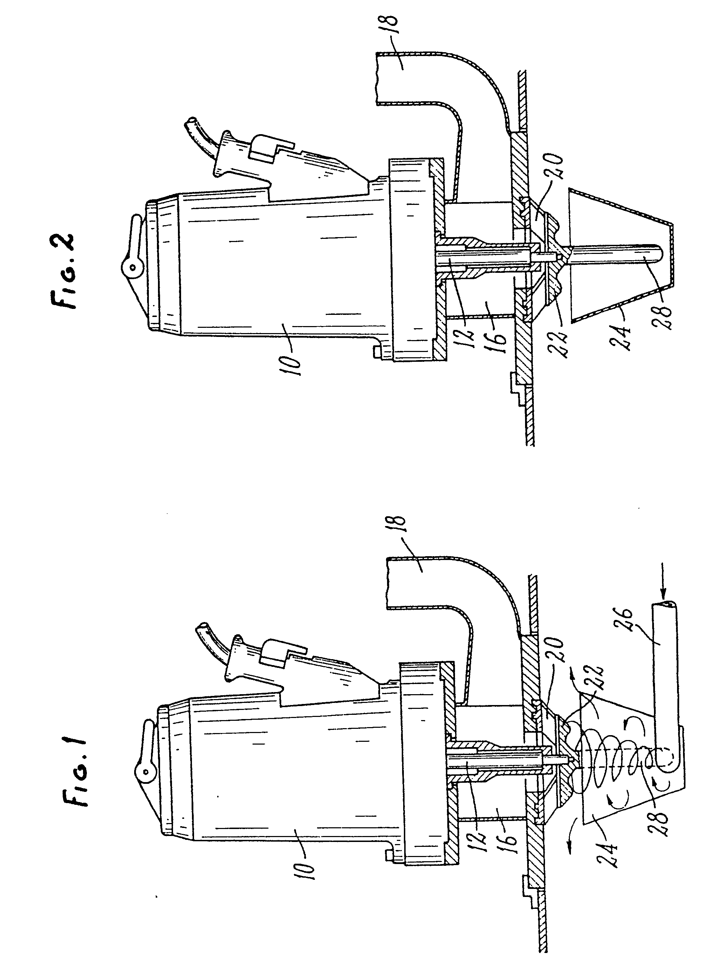

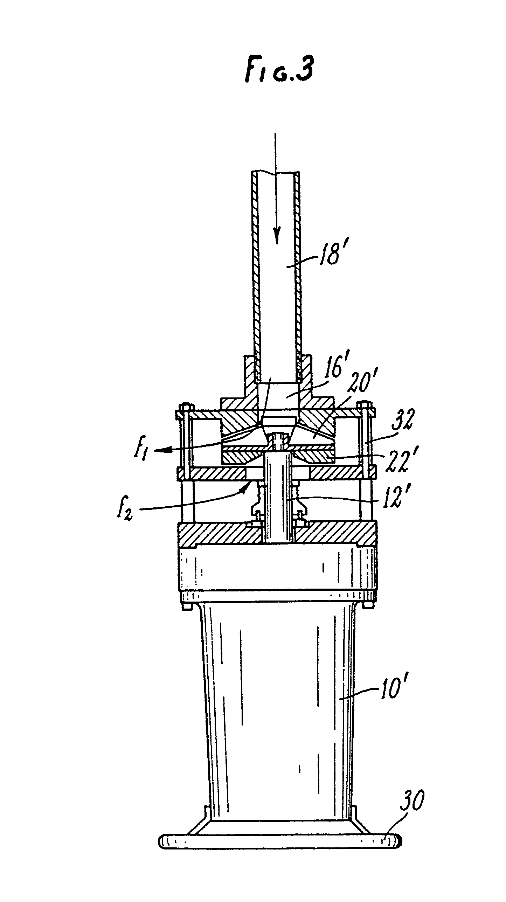

On se réfère en premier lieu aux figures 1 et 2. Sur ces figures, on a représenté un dispositif pour l'introduction d'un gaz au sein d'une masse liquide, tel que conforme au brevet mentionné ci-dessus. On voit, en 10, le moteur d'entraînement électrique, entraînant l'arbre 12 sur lequel sont calées la turbine radiale 20 et la turbine de brassage 22.

L'alimentation en air s'effectue par la tubulure d'admission 18, débouchant de la boîte à vent 16.

Selon l'invention, on dispose sous la turbine de brassage 22 une cuvette 24 en forme de tronc de cône dont la grande base, tournée vers le haut, est située sous cette turbine 22, selon son axe. Dans cette cuvette 24 débouche une conduite 26, fixée à la partie inférieure de la cuvette. Cette conduite 26 assure la liaison entre le bassin de décantation (non représenté) et le bassin d'aération, dans lequel est immergé le dispositif.

Dans l'exemple de réalisation représenté, on a disposé un arbre 28, fixé sous la turbine 22 et selon son axe, cet arbre ayant pour fonction d'assurer le guidage du tourbillon creux ou vortex, formé sous la turbine, pour que la pointe inférieure de ce vortex reste stable dans le centre de la cuvette, et que l'effet ainsi obtenu soit constant.

Enfin, l'invention prévoit des cheminées télescopiques (non représentées) dont les orifices inférieurs communiquent avec la partie basse de la conduite 26, et dont les orifices supérieurs sont en forme d'entonnoir.

Comme on le comprend, le dispositif selon cette invention utilise le vortex, ou tourbillon creux, qui se forme sous la turbine 22 dans la cuvette 24, et dont la pointe est orientée vers le bas, et qui provoque une aspiration pour assurer le pompage et la recirculation des boues décantées depuis le bassin de décantation jusqu'au bassin d'aération, dans lequel est positionné le dispositif. Les boues sont aspirées à partir de l'extrémité (non visible sur le dessin) de la conduite 26, et/ou des cheminées, vers l'aérateur.

Le dispositif selon l'invention, monté dans un dégraisseur, permet de remonter constamment les boues qui se déposent, et de les répartir dans l'ensemble du bassin. Il permet, en conséquence, d'éviter l'accumulation de boues dans le fond du dégraisseur.

Ce même dispositif permet, comme on vient de le voir, de recirculer les boues du bassin de dé-

2

cantation vers le bassin d'aération sans installer de pompe. Pour une telle application, la conduite 26, alimentant la cuvette 24, traverse la ou les parois séparant les bassins de décantation et d'aération, et son extrémité libre repose sur le fond du bassin de décantation. Les cheminées téléscopiques prévues sur la conduite, dans le bassin de décantation et/ou dans le bassin d'aération, ramènent les boues qui flottent vers le centre du bassin d'aération. Ces cheminées lorsqu'elles sont relevées, sont inactives, et abaissées elles assurent l'aspiration des flottants vers l'aérateur. On peut d'ailleurs obtenir le même effet en faisant varier le niveau du plan d'eau. Enfin, l'installation peut comprendre un système de vannes qui permet de régler le débit relatif de la recirculation des boues décantées et de la reprise des boues flottantes.

La figure 3 illustre l'application du dispositif selon le brevet mentionné ci-dessus à l'introduction d'air dans des aquariums industriels fixes et dans des cuves de transport de poissons vivants sur camions. On reconnaît, en 10′ le moteur immergé entraînant les turbines de brassage 22′ et radiale 20′. Le moteur 10′, de faible puissance, est placé sous les turbines de façon à être toujours immergé, ce qui permet d'en assurer le refroidissement. L'aérateur est pourvu d'une prise d'air 18′, placée selon l'axe du dispositif et débouchant dans la boîte à vent 16′, au-dessus de la turbine radiale 20′.

Le dispositif comporte un jeu de flasques qui sont montés entre des entretoises 32, ce qui permet de régler facilement leur écartement. Dans ce dispositif on utilise un joint d'étanchéité uniquement refroidi par eau. On évite ainsi l'emploi d'un lubrifiant, et notamment d'huile, ce qui élimine tout risque de pollution du bassin. Comme le montre la flèche $f_2$ sur la figure 3, l'eau aspirée par les côtés du dispositif lubrifie le joint avant d'être rejetée.

Dans l'exemple de réalisation représenté, le dispositif est posé sur le fond de l'aquarium, et à cet effet, il est pourvu d'un socle 30. En variante, il peut être suspendu par son tube d'alimentation en air 18′, et il est alors immobilisé à l'aide d'un collier fixé à la partie supérieure de l'aquarium. La turbine est, bien entendu, protégée afin de ne pas blesser les poissons.

De préférence, le moteur fonctionne en courant continu sous une tension de 24 V, ceci afin de permettre un montage du dispositif dans des cuves de transport de poissons vivants sur camion, le dispositif étant alors branché sur les batteries de ce camion. Par ailleurs, une telle alimentation présente également des avantages, pour des aérateurs destinés à des aquariums industriels: branché sur un jeu de batteries tampon, le dispositif selon l'invention continue à fonctionner en cas de panne de secteur, et les risques consécutifs à une interruption de l'alimentation en air sont ainsi éliminés.

L'armoire électrique qui contient le chargeur et la batterie peut aussi être équipée d'un rhéostat de champ, qui permet, en faisant varier la vitesse du moteur, de modifier le débit d'air introduit dans l'aquarium.

Enfin, on peut prévoir une sonde à oxygène reliée à un microprocesseur permettant un étalonnage maxi-mini de l'oxygène dissous dans la cuve, et une alarme sonore ou optique se déclenchant lorsque l'oxygène dissous descend au-dessous du niveau minimal sans que la turbine ne se remette à fonctionner.

**Revendications**

1. Dispositif pour introduire un gaz dans un liquide contenant des boues décantées devant être recirculées, du type qui comprend un moteur d'entraînement (10), une boîte à vent (16), une tubulure de prise de gaz (18) et une turbine de diffusion radiale (20) accouplée à une turbine de brassage (22), ces deux turbines étant immergées dans la masse liquide, caractérisé en ce qu'il comprend: une cuvette (24) de forme troncconique dont la grande base, tournée vers le haut, est placée sous la turbine de brassage (22) et dans l'axe de cette dernière, et une conduite (26) débouchant dans ladite cuvette à sa partie inférieure, immédiatement au-dessus de sa petite base, et amenant les boues à recirculer afin d'alimenter ladite cuvette tangentiellement, dans le sens de rotation de la turbine.

2. Dispositif selon la revendication 1, caractérisé en ce que l'on fixe sous la turbine, dans le prolongement de son axe (12), une arbre cylindrique (28) venant se positionner dans ladite cuvette (24), selon l'axe de cette dernière, ledit arbre cylindrique assurant le guidage du tourbillon creux ou vortex créé dans la cuvette par la rotation de la turbine.

3. Dispositif destiné à introduire un gaz au sein d'une masse liquide statique ou en mouvement, en vue d'en réaliser la solution dans ce liquide, qui comprend: un moteur d'entraînement (10′), une boîte à vent (16′), une tubulure de prise de gaz (18′) et une turbine de diffusion radiale (20′) accouplée à une turbine de brassage (22′), ces deux turbines étant immergées dans la masse liquide, caractérisé en ce que le moteur (10′) entraînant la turbine de brassage (22′) et la turbine de diffusion radiale (20′) est placé à la partie inférieure de façon à être toujours immergé, en ce que la prise d'air (18′) est située dans l'axe du dispositif, et en ce qu'il comporte des joints d'étanchéité lubrifiés à l'eau.

4. Dispositif selon la revendication 3, caractérisé en ce qu'il est pourvu d'un socle (30).

5. Application d'un dispositif selon l'une des revendications 1 et 2 à la prévention de la décantation des boues dans le fond des dégraisseurs aérés et du départ avec l'effluent épuré des flottants, ainsi qu'à la recirculation des boues activées du bassin de décantation au bassin d'aération, en permettant une reprise en continu, durant le temps où fonctionne le dispositif, des boues décantées et des flottants.

6. Application selon la revendication 5, caractérisée en ce que le bassin de décantation ou d'aération comprend plusieurs cheminées télescopiques, dont les orifices inférieurs communiquent avec la partie basse de ladite conduite (26), et dont les orifices supérieurs sont en forme d'entonnoir.

7. Application d'un dispositif selon l'une des revendications 3 ou 4, à l'aération des aquariums industriels fixes et des cuves de transport de poissons vivants sur camions.

8. Application selon la revendication 7, caractérisée en ce que le moteur d'entraînement (10) est alimenté en courant continu par les batteries du camion.

9. Application selon l'une des revendications 7 ou 8, caractérisée en ce que le dispositif est suspendu dans la masse liquide par son tube de prise d'air (18′), un collier fixé en haut du bassin assurant son immobilisation.

10. Application selon l'une des revendications 7 à 9, caractérisée en ce que le dispositif comporte une sonde à oxygène reliée à un microprocesseur permettant un étalonnage maxi-mini de l'oxygène dissous dans la cuve, une alarme se déclenchant lorsque l'oxygène dissous descend en-dessous du niveau minimal sans que la turbine se remette à fonctionner.

**Claims**

1. A device for introducing a gas into a liquid containing decanted sludges which are to be re-circulated, of the type comprising a driving-motor (10), a wind-box (16), a gas intake pipe (18) and a radial diffusion turbine (20) coupled with a stirring turbine (22), both turbines being immersed in the liquid mass, characterized in that it comprises a vat (24) in the form of a frustum of cone the longer and simultaneously upper base of which is located under the stirring turbine (22), coaxially to the latter, and a pipe (26) opening in said lower part of the vat closely above the shorter base of said vat and conveying the sludges which are to be re-circulated, for tangentially feeding said vat in the direction of rotation of the turbine.

2. A device according to claim 1, characterized in that a cylindrical shaft (28) is fastened under the turbine in prolongation of the axis (12) of the latter, and takes up its position in said vat (24) along the axis of the latter, said cylindrical shaft guiding the hollow whirl of whorl produced in the vat as a result of the rotation of the turbine.

3. A device for introducing a gas into a motionless or moving liquid mass, with a view to dissolve said gas in said liquid, comprising a driving-motor (10′), a wind-box (16′), a gas intake pipe (18′) and a radial diffusion turbine (20′) coupled with a stirring turbine (22′), both turbines being immersed in the liquid mass, characterized in that the motor (10′) driving the stirring turbine (22′) and the radial diffusion turbine (20′) is located in the lower part so that it is permanently immersed, the air intake (18′) being located on the axis of the device, and in that it comprises tight joints lubrificated with water.

4. A device according to claim 3, characterized in that it is provided with a stand (30).

5. The use of a device according to one of claims 1 and 2 for preventing sludges decanting at the bottom of ventilated oil separators and escape of floating matters with the cleaned sewage, as also for recirculating the activated sludges from the decantation tank up to the aeration tank, thus allowing a continuous recovery of the decanted sludges and floating matters while the device is working.

6. The use of said device according to claim 5, characterized in that the decantation or aeration tank comprises a plurality of telescopic outlet ducts comprising lower openings communicating with the lower part of said tubing (26) and funnel-shaped upper openings.

7. The use of a device according to one of claims 3 or 4 for ventilating stationary commercial aquariums and vats for the transport of living fishes on trucks.

8. The use of said device according to claim 7, characterized in that the driving-motor (10) is fed with direct current by the truck battery.

9. The use of said device according to one of claims 7 or 8, characterized in that the device is suspended in the liquid mass by means of its air intake pipe (18′) and fixed in position by a collar fastened on the top of the tank.

10. The use of said device according to one of claims 7 to 9, characterized in that said device comprises an oxygen-measuring device connected with a microprocessor allowing the calibrating from a minimum to a maximum of the oxygen dissolved in the vat, an alarm-signal being released when the quantity of dissolved oxygen falls under the minimal level without the turbine starting again.

**Patentansprüche**

1. Vorrichtung zum Begasen einer Flüssigkeit, die abgesetzte, wieder zu umwälzende Schlämme enthält, mit einem Antriebsmotor (10), einem Windkessel (16), einem Gasentnahmestutzen (18) und einer Radial-Diffusionsturbine (20), die mit einer Brauturbine (22) gekoppelt ist, wobei diese beiden Turbinen in der flüssigen Masse eingetaucht sind, dadurch gekennzeichnet, dass sie eine kegelstumpfförmige Wanne (24), deren längere, nach oben zugewandte Basis unter der Brauturbine (22) und längs der Achse dieser Turbine angeordnet ist, und eine Leitung (26) enthält, die im unteren Teil der Wanne, unmittelbar über ihrer kürzeren Basis mündet und die die wieder zu umwälzenden Schlämme tangential zur Wanne in der Drehrichtung der Turbine zuführt.

2. Vorrichtung nach Anspruch 1, dadurch gekennzeichnet, dass sie eine zylindrische Welle (28) enthält, die unter der Turbine und mit deren Achse (12) fluchtend angeordnet ist und in der Wanne (24) längs der Achse dieser letzteren ihre Stellung einnimmt, wobei diese zylindrische Welle die Führung des in der Wanne durch die Drehbewegung der Turbine erzeugten Wirbels gewährleistet.

3. Vorrichtung zum Begasen einer ruhigen oder bewegten flüssigen Masse zur Lösung des Gases in der Flüssigkeit, mit einem Antriebsmotor (10'), einem Windkessel (16'), einem Gasentnahmestutzen (18') und einer Radial-Diffusionsturbine (20'), die mit einer Brauturbine (22') gekoppelt ist, wobei diese beiden Turbinen in der flüssigen Masse eingetaucht sind, dadurch gekennzeichnet, dass der Motor (10'), der die Brauturbine (22') und die Radial-Diffusionsturbine (20') antreibt, im unteren Teil angeordnet ist, so dass er stets innerhalb der Flüssigkeit eingetaucht ist, dass der Luftentnahmestutzen (18') auf der Achse der Vorrichtung liegt und dass die Vorrichtung Dichtungen aufweist, die mit Wasser geschmiert werden.

4. Vorrichtung nach Anspruch 3, dadurch gekennzeichnet, dass sie mit einem Sockel (30) versehen ist.

5. Verwendung einer Vorrichtung nach einem der Ansprüche 1 und 2 zur Vorbeugung des Absetzens der Schlämme auf den Boden der belüfteten Entfettungsvorrichtungen oder des Abflusses der schwimmenden Produkte mit dem gereinigten Abwasser sowie der Umwälzung der aktivierten Schlämme vom Absetz- und Klärbecken bis zum Belüftungsbecken, mit kontinuierlicher Wiederaufnahme der abgesetzten Schlämme und der schwimmenden Produkte während des Betriebes der Vorrichtung.

6. Verwendung gemäss dem Anspruch 5, dadurch gekennzeichnet, dass das Absetz- oder Belüftungsbecken mehrere teleskopische Abzugsrohre aufweist, dere innere Öffnungen mit dem unteren Teil der Leitung (26) verbunden sind und deren obere Öffnungen jeweils die Form eines Trichters aufweisen.

7. Verwendung einer Vorrichtung nach einem der Ansprüche 3 bis 4 zur Belüftung von ortsfesten industriellen Aquarien oder von Wannen zur Beförderung von lebenden Fischen auf Lastwagen.

8. Verwendung gemäss Anspruch 7, dadurch gekennzeichnet, dass der Antriebsmotor (10) mit Gleichstrom durch die Batterie des Lastkraftwagens gespeist wird.

9. Verwendung gemäss einem der Ansprüche 7 oder 8, dadurch gekennzeichnet, dass die Vorrichtung mittels ihres Luftentnahmestutzens (18') in der flüssigen Masse aufgehängt und mittels eines am oberen Teil der Vorrichtung angeordneten Kragens festgebunden ist.

10. Verwendung gemäss einem der Ansprüche 7 bis 9, dadurch gekennzeichnet, dass die Vorrichtung eine Messeinrichtung zur Bestimmung des Sauerstoffgehalts enthält, die mit einem Mikroprozessor verbunden ist, der eine Maximum-Minimum-Eichung des in der Wanne gelösten Sauerstoffs erlaubt, wobei ein Alarmsignal erzeugt wird, wenn der Sauerstoffgehalt den Minimum-Wert unterschreitet, ohne dass die Turbine wieder in Betrieb gesetzt wird.

Fig. 1

Fig. 2

Fɪɢ.3